# EUROPÄISCHE PATENTSCHRIFT

(11) **EP 1 080 265 B1**
(45) Veröffentlichungstag und Bekanntmachung des Hinweises auf die Patenterteilung: **21.08.2002**
(21) Anmeldenummer: 99920842.4
(22) Anmeldetag: 04.05.1999
(51) Int. Cl.: D21F 1/70, D21B 1/32, B03D 1/14

(54) **VERFAHREN UND VORRICHTUNG ZUR FLOTATION VON STÖRSTOFFEN AUS EINER WÄSSRIGEN FASERSTOFFSUSPENSION**
METHOD AND DEVICE FOR FLOTATION OF POLLUTANTS FROM AN AQUEOUS FIBROUS MATERIAL SUSPENSION
PROCEDE ET DISPOSITIF POUR SEPARER PAR FLOTTATION DES SUBSTANCES POLLUANTES CONTENUES DANS UNE SUSPENSION AQUEUSE DE MATIERES FIBREUSES

(30) Priorität: 22.05.1998 DE 19823053
(43) Veröffentlichungstag der Anmeldung: 07.03.2001
(73) Patentinhaber: Voith Paper Patent GmbH, 89522 Heidenheim (DE)
(72) Erfinder: KEMPER, Martin, D-88250 Weingarten (DE)
(86) Internationale Anmeldenummer: EP9903008
(87) Internationale Veröffentlichungsnummer: WO99061699

(56) Entgegenhaltungen:
- EP-A- 0 798 416

## Beschreibung

Die Erfindung betrifft ein Verfahren zur Rotation von Störstoffen aus einer wässrigen Faserstoffsuspension gemäß dem Oberbegriff des Anspruchs 1.

Verfahren der genannten Art werden verwendet, um aus einer faserstoffhaltigen Faserstoffsuspension zumindest einen Teil der darin suspendierten Störstorfteilchen auszuscheiden. Bekanntlich wird bei einer Flotation ein die auszuscheidenden Stoffe enthaltender Schaum oder Schwimmschlamm gebildet Ein typischer Anwendungsfall eines derartigen Verfahrens ist die Aufbereitung von einer aus bedrucktem Altpapier gewonnenen wässrigen Faserstoffsuspension, in der die Druckfarbenpartikel bereits von Fasern abgelöst sind, so daß sie sich ausflotieren lassen. Der hier beschriebene Flotationsvorgang nutzt die Unterschiede zwischen Faserstoff und unerwünschten Feststoffteilchen in der Art, daß der Faserstoff aufgrund seiner Hydrophilie in der Faserstoffsuspension verbleibt, während die angesprochenen Feststoffteilchen hydrophob sind und deshalb zusammen mit den Luftblasen in den Schaum gelangen. Neben den Druckfarbenpartikeln gibt es auch eine Vielzahl weiterer Stoffe, die hydrophob sind und sich daher durch Flotation von dem Faserstoff trennen lassen. Solche Stoffe sind insbesondere Kleber, feine Kunststoffpartikel und eventuell auch Harze. Wenn durch das Flotationsverfahren Fasern von Verunreinigungen getrennt, also nicht alle Feststoffpartikel aussortiert werden sollen, spricht man von selektiver Flotation. Der ebenfalls benutzte Begriff "Flotationsdeinking" wird in der Regel nicht nur für die Entfernung von Druckfarbenpartikeln (ink = Druckfarbe) sondern auch allgemeiner für die selektive Flotation von Verunreinigungen aus Faserstoffsuspensionen verwendet

Der Stand der Technik bezüglich Flotationsverfahren für Faserstoffsuspensionen ist bereits sehr weit fortgeschritten. Daher gibt es Lösungen, welche durchaus geeignet sind, einen großen Teil der Feststoffpartikel durch Flotation zu entfemen.

In der EP 0 798 416 A1 wird ein Flotationsverfahren für eine faserstoffhaltige Suspension beschrieben. Diese wird mit einem Gas, z.B. Luft, vermischt und direkt in eine bereits in einem Flotationsgefäß vorhandene Suspension eingeführt. Der aus der Suspension abzuscheidende Feststoff gelangt mit Hilfe der Luftblasen in den Flotationsschaum. Zur Verbesserung des Verfahrens wird in dieser Publikation vorgeschlagen, auf eine ganz spezielle Weise in den so gebildeten Flotationsschaum eine Flüssigkeit zuzugeben, welche z. B. Wasser mit oder ohne Chemikalien sein kann.

Da Flotationsanlagen relativ aufwendig in der Erstellung und im Betrieb sind, ist es ein verständliches Ziel, deren Effekt weiter zu verbessern oder den notwendigen Aufwand für das Erreichen desselben Ergebnisses zu reduzieren.

Der Erfindung liegt daher die Aufgabe zugrunde, ein Flotationsverfahren zu schaffen, mit dem gute Reinigungsergebnisse erreichbar sind bei gleichzeitig möglichst geringem apparativen und betriebsmäßigen Aufwand.

Diese Aufgabe wird durch die kennzeichnenden Merkmale des Anspruchs 1 in vollem Umfang gelöst.

Mit Hilfe des erfindungsgemäßen Verfahrens wird eine optimale Ausnutzung der eingesetzten Mittel möglich. Insbesondere kann das zum Flotieren eingesetzte Gas, insbesondere Luft, optimal genutzt werden. Die unbelüftete Faserstoffsuspension wird direkt in den aufsteigenden Schaum zugegeben oder an einer Stelle, von der aus sie gegen die Steigrichtung des Schaumes sofort in diesen gelangt. Er trifft also auf einen bereits gebildeten Luftblasenverbund mit sich dazwischen befindenden Flüssigkeitskanälen, auf denen die Suspension absinkt. Dabei erhält sie optimalen Kontakt zu den Blasenoberflächen. Vorteilhaft ist ferner, daß sich auf diese Weise das Gegenstromprinzip realisieren läßt. D.h., daß die "schmutzigste" Suspension mit den bereits sehr stark beladenen Luftblasen in Kontakt kommt, auf dem Weg nach unten ständig sauberer wird, wobei auch die dann angetroffenen Luftblasen weniger Schmutzfracht tragen.

Die Erfindung und ihre Vorteile werden erläutert anhand von Zeichnungen. Dabei zeigen:
- Fig. 1: schematisch: Durchführung des erfindungsgemäßen Verfahrens an einer Rotationssäule;
- Fig. 2: schematisch: Durchführung des Verfahrens anhand einer Rohrzelle;
- Fig. 3: schematisch: Durchführung des Verfahrens anhand eines Flotationszyklons.

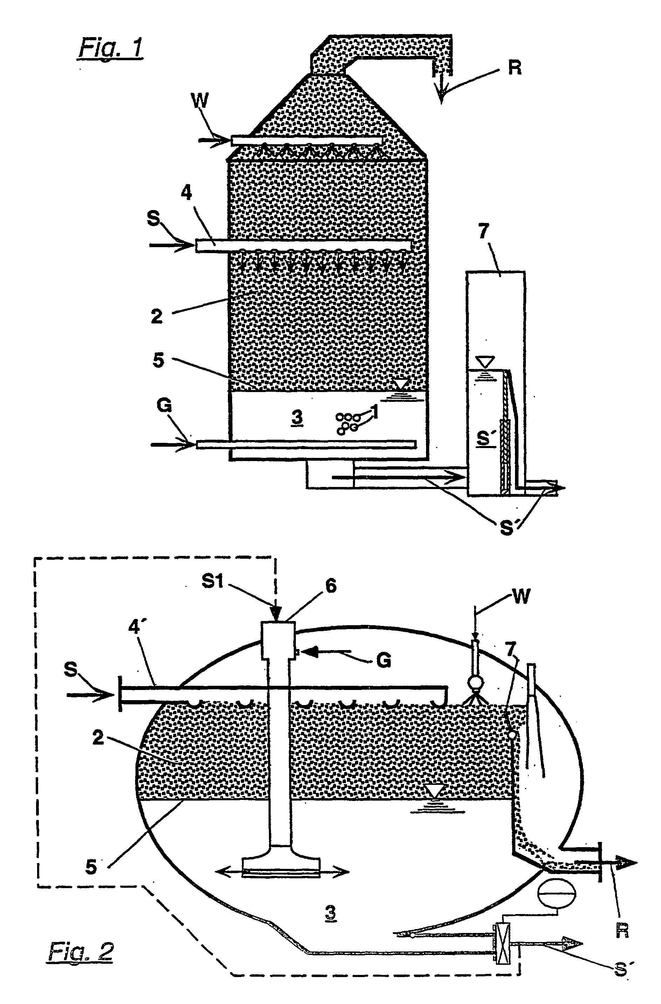

In Fig. 1 wird das Flotationsverfahren als Säulenflotation realisiert, bei der im wesentlichen vertikale Strömungen erzeugt werden. Die durch Zugabe von Gas G, z.B. durch poröse Rohre im Bodenbereich der Flotationszelle gebildeten Gasblasen 1, von denen nur wenige und diese übertrieben groß gezeichnet sind, steigen aus der Flüssigkeitsschicht 3 entgegen dem anliegenden Schwerefeld auf. Grundsätzlich kann das anliegende Schwerefeld die Erdgravitation sein oder in entsprechend anderen Ausführungsformen durch Zentrifugalkräfte verstärkt werden. (In solchen Fällen bedeutet "oben" gleich "in Gegenrichtung zum Kraftfeld"). Die aufgestiegenen Luftblasen sammeln sich oberhalb der Flüssigkeitsschicht 3 im Schaum 2. In diesen Schaum wird durch eine Zuführleitung 4 die Faserstoffsuspension S eingeführt, welche dann gegen die Steigrichtung des Schaumes nach unten sinkt. Wegen der großen Anzahl der Luftblasen teilt sich die abwärts gerichtete Strömung sehr fein auf, so daß eine entsprechend große Wahrscheinlichkeit zur Anlagerung der Störstoffe an die Luftblasen besteht. Nach allgemeiner Definition hat Schaum einen Gasgehalt von mindestens 50-Vol-%. Infolge des Suspensionszustromes sinkt im Einlaufbereich der Zuführleitung 4 der Luftgehalt lokal ab. Somit kann er, auf dem Weg gegen die Steigrichtung des Schaumes gesehen, zunehmen. Bei einer Flotation im normalen Erdschwerefeld heißt das: Unterhalb des Suspensionseinlaufes liegt eine Zone mit Schaum von höherem Luftgehalt. Dann folgt über einer mehr oder weniger bewegten Trennfläche 5 der Übergang vom Schaum 2 zur Flüssigkeitsschicht 3 der belüfteten Suspension, welche einen geringeren Luftgehalt hat. Eine belüftete Suspension ist bekanntlich eine Gas-in-Flüssigkeit-Dispersion und Schaum eine Flüssigkeit-in-Gas-Dispersion.

Bei dieser schematischen Darstellung ist auch die Zuführleitung 4 lediglich angedeutet. In einer technischen Apparatur ist sie so auszubilden, daß eine möglichst gleichmäßige Verteilung der zugegebenen Faserstoffsuspension S erfolgt. Nach erfolgter Reinigung sammelt sich die Faserstoffsuspension in der Flüssigkeitsschicht 3 und kann als Gutstoff S' abgeführt werden. Zwischen der Flüssigkeitsschicht 3 und dem Schaum 2 befindet sich die Trennfläche 5. Die belüftete Suspension baut auf Grund ihrer Dichte und Flüssigkeitshöhe einen statischen Druck auf, der am Auslauf des Gutstoffes S' aufgenommen werden muß. Somit bestimmt der dort anliegende Gegendruck die Lage der Trennfläche 5. Dazu kann eine Vorlage 7 mit einstellbarem Niveau dienen.

Der Schaum 2 strömt oberhalb der Zuführleitung 4 weiter aufwärts, bis er zusammen mit den an ihn gebundenen Störstoffen als Flotationsschaum R abgeführt werden kann. Nicht immer notwendig, aber vorteilhaft ist die Zugabe von Waschwasser W in den Schaum 2, weil dadurch eventuelle Faserverluste vermieden oder zumindest reduziert werden können.

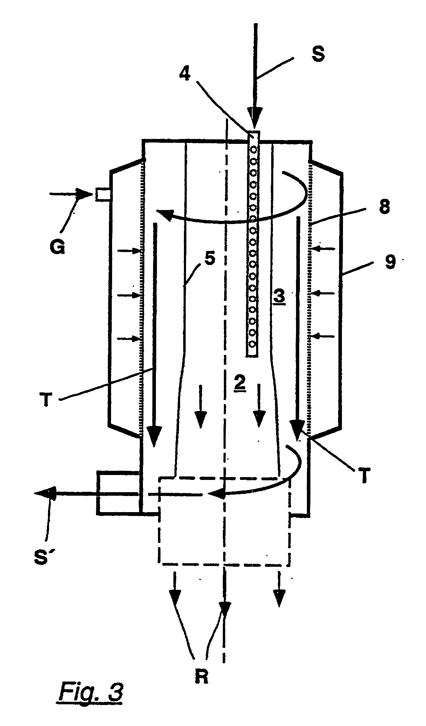

Fig. 2 zeigt, wie die für Flotationszwecke bekannte Rohrzelle so variiert werden kann, daß mit ihr das erfindungsgemäße Verfahren möglich ist. Entscheidend ist, daß eine Zuführstelle 4' so angebracht wird, daß sie die Faserstoffsuspension S gleichmäßig, zumindest auf einem Teil des Schaumes 2, in der Rohrzelle gleichmäßig einleiten kann. Bei dem hier gezeigten Beispiel befindet sich die Zuführstelle 4' oberhalb der oberen Schaumgrenze. Somit fließt die zugegebene Faserstoffsuspension S durch die gesamte Schaumschicht hindurch, was eine besonders gute Ausnutzung des in der Erfindung benutzten Prinzips bedeutet. Der Schaum 2 fließt seitlich über ein Schaumwehr 7 ab. Unter Umständen ist es vorteilhaft, nicht die gesamte Oberfläche des Schaumes zu begießen, sondern einen Bereich in der Nähe des Schaumwehres 7 frei zu halten. Dann können Stoffverluste vermieden werden, sofern es gelingt, in diesem freigehaltenen Bereich die unbeabsichtigt ausgetragenen Fasern in den darunterliegenden Schaum zurückzuspülen. Ein Turbulenzrohr 6 mündet in die Flüssigkeitsschicht 3 unterhalb der Trennfläche 5 und ist geeignet, ein Gemisch aus Suspension und Gasblasen zu bilden und in die Flüssigkeitsschicht einzuführen. Diese Gasblasen steigen durch die Flüssigkeitsschicht 3 auf, bis sie zu Schaum werden. Als Turbulenzrohr 6 kann ein eventuell variiertes, von normalen Flotationszellen bereits bekanntes Bauteil verwendet werden. Dieses ist z.B. mit einem Injektor und einem Turbulenzerzeuger versehen, so daß die zuströmende Flüssigkeit innerhalb des Rohres mit dem Gas G versetzt wird. Zweckmäßig ist es, wenn das Gas G, das zur Bildung der Gasblasen verwendet wird, aus dem Zellen-Volumen oberhalb des Schaumes 2 entnommen wird, weil dadurch eine Gaszirkulation entsteht. Als Flüssigkeit zur Zugabe in das Turbulenzrohr 6 kann mit besonderem Vorteil ein Teilstrom S1 des Gutstoffes S' verwendet werden.

Fig. 3 zeigt eine weitere Möglichkeit zur technischen Realisierung der Erfindung. Wie bereits erwähnt, kann ein Flotationsverfahren dadurch verbessert werden, daß durch Zentrifugalkräfte ein Kraftfeld erzeugt wird, mit dem die Steigtendenz der Gasblasen höher ist als bei einer Flotation in der Erdgravitation. Ein Beispiel hierfür sind Flotationszyklone. Die Vorgänge, die in einem Flotationszyklon ablaufen, sind in der Fig. 3 schematisch dargestellt. Die sich innerhalb des Zyklons befindende Suspension wird mit geeigneten Mitteln in eine Rotationsbewegung versetzt, wobei solche Mittel entweder ein angetriebenes Rührwerk, ein Tangentialeinlauf für Luft oder für die Suspension oder ein Tangentialauslauf für den Gutstoff sein können. In dem hier gezeigten Falle wird an der gewünschten Stelle, also dort, wo sich im Betrieb der Schaum 2 befindet, mit Hilfe mindestens einer Zuführleitung 4, z.B. eines Düsenrohres, die unbelüftete Suspension S eingegeben, wobei auf Grund der Anordnung der Einströmlöcher eine Tangentialströmung erzeugt wird. Der Flotationsvorgang als solcher läuft dann ähnlich ab, wie schon bisher zu den Fig. 1 und 2 beschrieben. Dabei verläuft allerdings das Kraftfeld mit einer mehr oder weniger stark radial gerichteten Komponente, so daß sich die Steigrichtung der Blasen von außen nach innen einstellt. Diesem Radialtransport von Gasblasen und Suspension überlagert sich der Axialtransport T in Richtung Auslaßöffnungen für Gutstoff S' und Flotationsschaum R. Die Begasung erfolgt mit Hilfe eines den Zyklon außen umgebenden Luftkastens 9, der mit dem Inneren über eine luftdurchlässige Wand 8 in Verbindung steht. Die Aufstellung des Flotationszyklons kann auch umgekehrt, also mit Ausläufen oben oder liegend oder schräg sein.

## Patentansprüche

1. Verfahren zur Flotation von Störstoffen aus einer wässrigen Faserstoffsuspension (S),
bei dem Gasblasen (1) in einer Flüssigkeit erzeugt werden,
mit Hilfe der Gasblasen (1) ein gegen das Schwerefeld aufsteigender Schaum (2) gebildet wird,
die Störstoffe an die Gasblasen (1) angelagert werden und
die Störstoffe zusammen mit den Gasblasen (1) in einem Flotationsschaum (2') abgeführt werden,
**dadurch gekennzeichnet,**
**daß** die Faserstoffsuspension (S) dem Schaum (2) zugegeben,
gegen die Steigrichtung des Schaumes (2) durch diesen unter Abgabe der Störstoffe an den Schaum (2) hindurchgeführt und dann
in gereinigter Form als Gutstoff (S') abgeführt wird.

2. Verfahren nach Anspruch 1,
**dadurch gekennzeichnet,**
**daß** die Gasblasen (1) in einer sich unterhalb des Schaumes (2) befindenden Flüssigkeitsschicht (3) erzeugt werden.

3. Verfahren nach Anspruch 1 oder 2,
**dadurch gekennzeichnet,**
**daß** die Gasblasen (1) im wesentlichen Luftblasen sind.

4. Verfahren nach Anspruch 1 oder 2,
**dadurch gekennzeichnet,**
**daß** die Gasblasen (1) mit einem Gas (G) gefüllt sind, das leichter ist als Luft.

5. Verfahren nach Anspruch 1oder 2,
**dadurch gekennzeichnet, .**
**daß** die Gasblasen (1) mit einem Gas (G) gefüllt sind, das schwerer ist als Luft.

6. Verfahren nach einem der voranstehenden Ansprüche,
**dadurch gekennzeichnet,**
**daß** die Trennung in einem Schwerefeld ausgeführt wird, welches durch Zentrifugalkräfte größer ist als die Erdgravitation.

7. Verfahren nach Anspruch 6,
**dadurch gekennzeichnet,**
**daß** die Trennung in einem Flotationszykion ausgeführt wird.

8. Verfahren nach einem der voranstehenden Ansprüche,
**dadurch gekennzeichnet,**
**daß** die dem Schaum (2) zugegebene Faserstoffsuspension (S) vorher mit Luft vermischt wird.

9. Verfahren nach einem der voranstehenden Ansprüche,
**dadurch gekennzeichnet,**
**daß** die dem Schaum (2) zugegebene Faserstoffsuspension (S) vorher nicht mit Luft vermischt wird.

10. Verfahren nach einem der voranstehenden Ansprüche,
**dadurch gekennzeichnet,**
**daß** der Schaum (2) oberhalb der Zugabestelle für die Faserstoffsuspension (S) mit Wasser (W) vermischt wird.

11. Verfahren nach Anspruch 10,
**dadurch gekennzeichnet,**
**daß** das Wasser (W) geklärtes Rüclwasser ist mit einem Faserstoffgehalt, der maximal 20 % des Faserstoffgehaltes der Faserstoffsuspension (S) beträgt.

12. Verfahren nach einem der voranstehenden Ansprüche,
**dadurch gekennzeichnet,**
**daß** der Schaum (2) beim Aufsteigen durch strömungswirksame Einbauten hindurchgeführt wird.

13. Verfahren nach Anspruch 12,
**dadurch gekennzeichnet,**
**daß** die strömungswirksamen Einbauten Lochbleche sind.

## Claims

1. Method for flotation of pollutants from an aqueous fibrous material suspension (S),
in which gas bubbles (1) are produced in a liquid,
by means of the gas bubbles (1), a foam (2) which rises up against the gravitational field is formed,
the pollutants are attached to the gas bubbles (1) and
the pollutants are discharged together with the gas bubbles (1) in a flotation foam (2'),
**characterised in that**
the fibrous material suspension (S) is added to the foam (2),
is guided counter to the rising direction of the foam (2) through the latter whilst discharging the pollutants into the foam (2) and then being discharged in purified form as accepted material (S').

2. Method according to claim 1,
**characterised in that**
the gas bubbles (1) are produced in a liquid layer (3) which is located underneath the foam (2).

3. Method according to claim 1 or 2,
**characterised in that**
the gas bubbles (1) are essentially air bubbles.

4. Method according to claim 1 or 2,
**characterised in that**
the gas bubbles (1) are filled with a gas (G) which is lighter than air.

5. Method according to claim 1 or 2,
**characterised in that**
the gas bubbles (1) are filled with a gas (G) which is heavier than air.

6. Method according to one of the preceding claims,
**characterised in that**
separation is implemented in a gravitational field which because of centrifugal forces is greater than earth gravitation.

7. Method according to claim 6,
**characterised in that**
separation is implemented in a flotation cyclone.

8. Method according to one of the preceding claims,
**characterised in that**
the fibrous material suspension (S), which is added to the foam (2), is mixed with air in advance.

9. Method according to one of the preceding claims,
**characterised in that**
the fibrous material suspension (S), which is added to the foam (2), is not mixed with air in advance.

10. Method according to one of the preceding claims,
**characterised in that**
the foam (2) above the addition point for the fibrous material suspension (S) is mixed with water (W).

11. Method according to claim 10,
**characterised in that**
the water (W) is clarified whitewater with a fibrous material content which is maximum 20% of the fibrous material content of the fibrous material suspension (S).

12. Method according to one of the preceding claims,
**characterised in that**
the foam (2) is guided during rising through flow-effective baffles.

13. Method according to claim 12,
**characterised in that**
the flow-effective baffles are perforated plates.

## Revendications

1. Procédé de flottation de contaminants contenus dans une suspension aqueuse de matières fibreuses (S), dans lequel des bulles de gaz (1) sont produites dans un liquide, une mousse (2) montant à l'encontre du champ de gravité est formée à l'aide des bulles de gaz (1), les contaminants se déposent sur les bulles de gaz (1) et sont évacuées avec les bulles de gaz (1) dans une mousse de flottation (2'),
**caractérisé**
**en ce qu'**on ajoute la suspension de matières fibreuses (S) à la mousse (2), on la fait passer, dans le sens opposé au sens ascendant de la mousse (2), à travers celle-ci, tandis que les contaminants sont cédés à la mousse (2), puis on l'évacue sous une forme épurée en tant que pâte épurée (S').

2. Procédé selon la revendication 1, **caractérisé en ce que** les bulles de gaz (1) sont produites dans une couche de liquide (3) se trouvant au-dessous de la mousse (2).

3. Procédé selon la revendication 1 ou 2, **caractérisé en ce que** les bulles de gaz (1) sont essentiellement des bulles d'air.

4. Procédé selon la revendication 1 ou 2, **caractérisé en ce que** les bulles de gaz (1) sont chargées d'un gaz (G) qui est plus léger que l'air.

5. Procédé selon la revendication 1 ou 2, **caractérisé en ce que** les bulles de gaz (1) sont chargées d'un gaz (G) qui est plus lourd que l'air.

6. Procédé selon l'une des revendications précédentes, **caractérisé en ce qu'**on exécute la séparation dans un champ de gravité qui du fait des forces centrifuges est supérieur à la gravitation terrestre.

7. Procédé selon la revendication 6, **caractérisé en ce que** la séparation s'effectue dans un cyclone de flottation.

8. Procédé selon l'une des revendications précédentes, **caractérisé en ce que** la suspension de matières fibreuses (S) ajoutée à la mousse (2) est mélangée à l'air préalablement.

9. Procédé selon l'une des revendications précédentes, **caractérisé en ce que** la suspension de matières fibreuses (S) ajoutée à la mousse (2), n'est pas mélangée à l'air préalablement.

10. Procédé selon l'une des revendications précédentes, **caractérisé en ce que** la mousse (2) est mélangée à de l'eau (W) au-dessus de l'emplacement auquel est ajoutée la suspension de matières fibreuses (S).

11. Procédé selon la revendication 10, **caractérisé en ce que** l'eau (W) est de l'eau de retour clarifiée avec une teneur en matières fibreuses qui représente au maximum 20 % de la teneur en matières fibreuses de la suspension de matières fibreuses (S).

12. Procédé selon l'une des revendications précédentes, **caractérisé en ce que** dans son mouvement ascendant la mousse (2) est conduite à travers des dispositifs intégrés qui favorisent l'écoulement.

13. Procédé selon la revendication 12, **caractérisé en ce que** les dispositifs intégrés qui favorisent l'écoulement sont des tôles perforées.
